# EUROPÄISCHE PATENTANMELDUNG

(11) **EP 4 687 108 A1**
(43) Veröffentlichungstag der Anmeldung: **04.02.2026**
(21) Anmeldenummer: 25190429.8
(22) Anmeldetag: 18.07.2025
(51) Int. Cl.: G06V 10/22, G06V 10/26, G06V 10/82, G06V 20/60, G06V 30/224

(54) **VERFAHREN UND VORRICHTUNG ZUM ERKENNEN ZUMINDEST EINER INSTANZ EINES OBJEKTES WÄHREND EINES ARBEITSABLAUFS IN EINER ARBEITSUMGEBUNG**

(30) Priorität: 02.08.2024 DE 102024122058
(71) Anmelder: SICK AG, 79183 Waldkirch (DE)
(72) Erfinder: BOEHNING, Markus, 22307 Hamburg (DE); WARMUTH, Felix, 22523 Hamburg (DE); ECKERT, Christoph, 22301 Hamburg (DE)
(74) Vertreter: Manitz Finsterwald Patent- und Rechtsanwaltspartnerschaft mbB

(57) **Zusammenfassung**

Die Erfindung betrifft ein Verfahren zum Erkennen zumindest einer Instanz eines Objektes während eines Arbeitsablaufs in einer Arbeitsumgebung, mit den Schritten (A) Aufnehmen eines Bildes der Arbeitsumgebung durch einer Kameravorrichtung, (B) Übertragen des Bildes an eine Kontroll- und Steuereinheit, (C) Detektieren einer vorgegebenen oder vorgebbaren Ausgangsregion für das Segmentieren der Instanz in dem Bild, wodurch die Instanz durch die Kontroll- und Steuereinheit für das Segmentieren ausgewählt wird, und (D) Segmentieren der Instanz in dem Bild ausgehend von der detektierten und innerhalb der Instanz angeordneten Ausgangsregion durch die Kontroll- und Steuereinheit und Erkennen der segmentierten Instanz.

## Beschreibung

Die Erfindung betrifft ein Verfahren und eine Vorrichtung zum Erkennen zumindest einer Instanz eines Objektes während eines Arbeitsablaufs in einer Arbeitsumgebung.

Bei stationären Anwendungen und Arbeitsabläufen, bei denen sich die Gegebenheiten mit der Zeit kontinuierlich verändern, beispielsweise bei der Palettierung und Depalettierung von Waren oder Paketen, werden häufig stationär montierte 2D und/oder 3D Sensor Systeme verwendet, um die Waren oder Pakete auf Bändern und Paletten zu erkennen, einzelne Instanzen der Waren oder Pakete zu segmentieren, und beste Greif-Koordinaten zum Greifen der Instanzen für einen Roboterarm zu bestimmen.

Zur Segmentierung können beispielsweise Algorithmen zur Anwendung kommen, welche auf der Detektion von Kanten ("edge detection") in den Bilddaten oder auf einem Vergleich mit vorgegebenen Objektformen ("CAD matching") basieren. Auch können auf annotierte Daten trainierte Neuronale Netzwerke zur Segmentierung der Bilddaten verwendet werden. Dabei kann die Qualität der Segmentierung durch die Bereitstellung von Vorabinformationen verbessert werden. Zu nennen sind hier beispielsweise die Markierung eines interessierenden Bereiches ("region of interest"), die Auswahl von Positiv- und Negativpunkten zur Markierung eines Bereichs innerhalb bzw. außerhalb einer Instanz oder auch die Bereitstellung von Objektabmessungen. Insbesondere bei der Verwendung von Positiv- und Negativpunkten als Vorabinformation macht dies jedoch eine manuelle Markierung jeder einzelnen Instanz durch eine Person mit Fachwissen notwendig. Dies macht die Segmentierung aufwändig und ineffizient, und stellt daher keine Option für automatisierte Instanz-Segmentierungsaufgaben von a priori unbekannten Objekten dar.

Es ist daher eine Aufgabe der Erfindung, ein verbessertes Verfahren und eine Vorrichtung anzugeben, welche ein einfaches, schnelles, effizientes und kostengünstiges Erkennen einer Instanz eines Objektes während eines Arbeitsablaufs in einer Arbeitsumgebung ermöglichen.

Die Aufgabe wird in einem ersten Aspekt der Erfindung durch ein Verfahren mit den Merkmalen des Anspruchs 1 gelöst und insbesondere dadurch, dass das Verfahren die Schritte aufweist:
- Aufnehmen eines Bildes der Arbeitsumgebung durch eine Kameravorrichtung,
- Übertragen des Bildes an eine Kontroll- und Steuereinheit,
- Detektieren einer vorgegebenen oder vorgebbaren Ausgangsregion für das Segmentieren der Instanz in dem Bild, wodurch die Instanz durch die Kontroll- und Steuereinheit für das Segmentieren ausgewählt wird,
- Segmentieren der Instanz in dem Bild ausgehend von der detektierten und innerhalb der Instanz angeordneten Ausgangsregion durch die Kontroll- und Steuereinheit und Erkennen der segmentierten Instanz.

Das Verfahren dient dem Erkennen von zumindest einer Instanz eines Objektes während eines Arbeitsablaufs in einer Arbeitsumgebung. Als Arbeitsumgebung wird in dieser Anmeldung ein dreidimensionaler Bereich bezeichnet, welcher während des Arbeitsablaufs benötigt wird. Hierbei kann der Arbeitsablauf eine Reihe von gleichartigen und/oder verschiedenen Arbeitsschritten umfassen. Die Arbeitsumgebung kann beispielsweise ein Bereich eines Raums, einer Halle oder eines Lagers sein, in welchem ein Arbeitsablauf, bei dem sich die Gegebenheiten mit der Zeit kontinuierlich verändern, durchgeführt wird.

Bei dem Arbeitsablauf kann es sich beispielsweise um eine Palettierung oder Depalettierung von Waren oder Paketen, Bin Picking oder das Be- und Entladen von einem Förderband handeln. Hierbei ist es notwendig, einzelne Instanzen, d.h. einzelne Waren oder Pakete, zu erkennen und beispielsweise deren Position und geometrische Maße zu erfassen. Die Instanzen können sich in ihrer Form und/oder Größe unterscheiden, sind jedoch alle demselben Objekt "Ware" bzw. "Paket" zuordenbar.

Gemäß dem Verfahren wird in einem ersten Schritt ein Bild der Arbeitsumgebung aufgenommen. Die hierfür verwendete Kameravorrichtung kann stationär montiert sein und kann 2D und/oder 3D Sensor Systeme zur Überwachung der Arbeitsumgebung umfassen. Das Bild kann allgemein mehrere Instanzen enthalten, wobei je nach Anordnung und/oder Ausrichtung der Instanzen die jeweilige vorgegebene oder vorgebbare Ausgangsregion in dem Bild erkennbar bzw. erfassbar oder nicht erkennbar bzw. erfassbar ist. Zumindest eine Instanz wird allgemein jedoch derart angeordnet sein, dass die Kontroll- und Steuereinheit die Ausgangsregion innerhalb der Instanz erfassen kann.

Die Ausgangsregion kann eine Markierung sein, die an der Instanz angebracht ist und in dem Bild der Instanz durch die Kontroll- und Steuereinheit detektiert und erkannt werden kann. Die Ausgangsregion kann strukturiert sein und insbesondere eine inhomogene Helligkeitsverteilung aufweisen. Die Ausgangsregion bildet einen Positivpunkt oder eine positive Markierung für die Instanz, die aktuell ausgewählt ist und nachfolgend segmentiert wird. Gleichzeitig bildet die Ausgangsregion für den aktuellen Segmentierungsschritt einen Negativpunkt oder eine negative Markierung für alle anderen möglichen Instanzen im Bild.

Nachdem das Bild der Arbeitsumgebung an die Kontroll- und Steuereinheit übertragen wurde, erfasst und detektiert die Kontroll- und Steuereinheit die Ausgangsregion einer beliebigen Instanz in dem Bild und wählt diese dadurch für den nachfolgenden Schritt der Segmentierung aus. Mit anderen Worten wird durch das Detektieren der Ausgangsregion ein Positivpunkt als Vorabinformation in/für das Bild der Instanz gesetzt, welcher die Instanz für die Segmentierung auswählt. Gleichzeitig wirkt die detektierte Ausgangsregion als Negativpunkt für alle anderen Instanzen im Bild, welche damit von dem aktuellen Segmentierungsschritt ausgeschlossen sind. Nachdem die Instanz ausgewählt wurde, segmentiert die Kontroll- und Steuereinheit die Instanz in dem Bild ausgehend von der detektierten Ausgangsregion. Das segmentierte Bild der Instanz kann nun dazu verwendet werden, Parameter der Instanz wie beispielsweise Position, Ausrichtung oder weitere geometrische Merkmale oder Maße zu ermitteln und an eine Arbeitsvorrichtung zu übertragen, um einen Arbeitsvorgang an der Instanz durchzuführen.

Das Verfahren kann mit dem Schritt der Detektion einer Ausgangsregion in einer weiteren Instanz und ihrer nachfolgenden Segmentierung in dem Bild weitergeführt werden. Die Wiederholung dieser beiden Schritte kann prinzipiell solange erfolgen, bis alle Instanzen segmentiert wurden, deren Position und Ausrichtung ein Erfassen und Erkennen der Ausgangsregion in der jeweiligen Instanz ermöglichen.

Da sich während des Arbeitsablaufs die Position und Ausrichtung der Instanzen jedoch ändern kann, wird das Bild im Allgemeinen nur für das Segmentieren einer einzigen Instanz oder einiger weniger Instanzen verwendet und daraufhin durch ein weiteres aktuelleres Bild ersetzt werden. In diesem Fall beginnt das Verfahren wieder mit dem Schritt des Aufnehmens eines Bildes der Arbeitsumgebung, gefolgt von dem Übertragen dieses Bildes an die Kontroll- und Steuereinheit und dem nachfolgenden Detektieren einer Ausgangsregion.

Durch das Detektieren der Ausgangsregion ermöglicht das Verfahren ein einfaches, schnelles, effizientes und kostengünstiges Erkennen einer Instanz eines Objektes während eines Arbeitsablaufs in einer Arbeitsumgebung.

Das Verfahren kann bei allen logistikbezogenen Anwendungen durchgeführt werden, beispielsweise bei der Auftragskommissionierung und -dekommissionierung wie dem Bin Picking, Palettieren, Depalettieren und bei Track & Trace Anwendungen. Allgemeiner ausgedrückt ist das Verfahren auf jede Anwendung anwendbar, die auf einer bildlichen Wahrnehmung beruht.

Gemäß einer Ausführungsform erfolgt das Detektieren der Ausgangsregion in dem Bild der Arbeitsumgebung durch die Kontroll- und Steuereinheit automatisch.

Gemäß einer Ausführungsform erfolgt das Segmentieren der Instanz in dem Bild vollständig automatisch und interaktionsfrei.

Die Segmentierung der Instanz kann somit vollständig automatisiert werden und erfordert insbesondere keine Interaktion durch eine Person mit Fachwissen. So ist es ist beispielsweise nicht mehr erforderlich, manuell, beispielsweise durch ein Anklicken der entsprechenden Position, Positivpunkte als Vorabinformation in das Bild der Instanz zu setzen, um die Instanz für die Segmentierung auszuwählen. Das Verfahren eignet sich somit auch für automatisierte Instanz-Segmentierungsaufgaben von a priori unbekannten Objekten.

Gemäß einer Ausführungsform umfasst die Ausgangsregion in dem Bild der Arbeitsumgebung eine Fläche, die kleiner ist als die Fläche der Instanz in dem Bild der Arbeitsumgebung, insbesondere wobei die Fläche der Ausgangsregion kleiner ist als 80%, bevorzugt kleiner ist als 60% der Fläche der Instanz. Die Ausgangsregion kann wesentlich kleiner sein als die Instanz, in deren Grenzen sie sich flächenmäßig befindet und für deren Segmentierung sie als Positivpunkt oder positive Markierung dient. So kann es sich bei der Ausgangsregion beispielsweise um eine kleine Markierung handeln, die an der Instanz angebracht ist und von der Steuer- und Kontrolleinheit detektiert und erkannt werden kann. Hierbei versteht es sich, dass die Ausgangsregion eine untere Grenze ihrer flächigen Ausdehnung im Bild nicht unterschreiten sollte, um eine sichere Detektion durch die Steuer- und Kontrolleinheit zu gewährleisten.

Gemäß einer Ausführungsform unterscheiden sich die Ausgangsregion und die Instanz in dem Bild der Arbeitsumgebung in der Form und/oder der Helligkeitsverteilung und/oder dem Histogramm der Helligkeitswerte und/oder dem kumulierten Histogramm der Helligkeitswerte. Der Helligkeitswert kann beispielsweise der Intensitätswert eines Bildelementes oder Pixels des Bildes sein. Insbesondere unterscheiden sich die Ausgangsregion und das Bild der Instanz außerhalb der Ausgangsregion in den vorgenenannten Merkmalen. Die Ausgangsregion und Instanz erscheinen somit im Bild nicht ähnlich. Die Ausgangsregion dient folglich nicht als Referenz oder Vorlage, um im Rahmen von "Template Matching" oder "Matched Filter" Verfahren die Instanz zu segmentieren, sondern kann sich von der Instanz struktur-, form- und helligkeitsmäßig unterscheiden. Auf diese Weise dient die Ausgangsregion rein als positive Markierung, mittels derer die Instanz für das Segmentieren ausgewählt wird, und nicht als Referenzregion für die Segmentierung an sich. Die Ausgangregionen verschiedener detektierter Instanzen können ihrerseits eine selbstähnliche Struktur, Form oder Helligkeitsverteilung aufweisen. Die Ausgangregionen können somit als positive Markierungen aufgefasst werden, welche derselben Klasse zugerechnet werden können, sich jedoch im Detail unterscheiden können.

Gemäß einer Ausführungsform ist die Ausgangsregion eine kodierte Markierung, insbesondere ein Barcode oder ein QR-Code. Derartige kodierte Markierungen werden oft standardmäßig angebracht, um Objekte oder deren Instanzen identifizieren und zuordnen zu können. Dabei können Position und Ausrichtung der Markierung im Allgemeinen mit großer Genauigkeit bestimmt werden. Das Verfahren kann nun diese bereits an der Instanz vorhandene Markierung nutzen, um die Instanz auszuwählen und zu segmentieren. Hierbei muss nur die kodierte Markierung als solche erkannt und detektiert werden, ein Auslesen und/oder eine Dekodierung der in der Markierung kodierten individuellen Daten ist hingegen für die Detektion der Auswahlregion nicht erforderlich. Standardmäßig ohnehin vorhandene und an den Instanzen angebrachte Markierungen können somit zusätzlich für eine kostengünstige, robuste und effiziente Segmentierung der Instanzen verwendet werden.

Gemäß einer Ausführungsform umfasst die Kontroll- und Steuereinheit ein Neuronales Netzwerk, wobei das Neuronale Netzwerk eine, insbesondere textbasierte und/oder audiobasierte, Objektbeschreibung der Ausgangsregion empfängt, die Objektbeschreibung in eine bildliche Darstellung dekodiert und überträgt, und die Ausgangsregion für das Segmentieren der Instanz auf Basis der in eine bildliche Darstellung übertragenen Objektbeschreibung in dem Bild der Arbeitsumgebung detektiert. Die Objektbeschreibung kann auch Bestandteile umfassen, die bereits bildlich dargestellt sind und somit bereits eine bildliche Form aufweisen. Die durch die Ausgangsregion bereitgestellte Vorabinformation ist somit nicht auf geometrische Informationen wie Positiv- und Negativpunkte, interessierende Bereiche ("regions of interest") und insbesondere nicht auf Positionen von kodierten Markierungen beschränkt. Vielmehr kann die Vorabinformationen eine textliche Objektbeschreibung umfassen, welche als Eingabe für Segmentierungsmodelle verwendet werden kann, die mittels Neuronaler Netzwerke Bilder und Text kombinieren.

Gemäß einer Ausführungsform wird eine vorgegebene Ausrichtung und/oder eine vorgegebene Position der detektierten Ausgangsregion an der Instanz als zusätzliche Information für das Segmentieren der Instanz verwendet. Markierungen werden auf den Instanzen oft an vorgegebenen Positionen und mit einer vorgegebenen Ausrichtung, beispielsweise parallel zu einer Kante oder zu mehreren Kanten der Instanz, angeordnet. Diese Information kann von der Steuer- und Kontrolleinheit zusätzlich genutzt werden, um das Detektieren der Ausgangsregion und das Segmentieren der Instanz weiter zu verbessern und noch effizienter zu gestalten.

Gemäß einer Ausführungsform handelt es sich bei dem Bild um ein zweidimensionales oder ein dreidimensionales Abbild der Arbeitsumgebung. Bei der Kameravorrichtung kann es sich beispielsweise um eine 2D RGB-Kamera, eine 3D Lichtlaufzeit-Kameras ("Time of Flight", ToF) oder eine 3D Stereo-Kameras handeln. Die 3D Kameras stellen Bilddaten bereit, welche eine zusätzliche Tiefeninformation aufweisen. Diese Tiefeninformation ist für den Ablauf des Verfahrens nicht notwendig, kann jedoch nach erfolgter Segmentierung die Ermittlung genauerer geometrischer Parameter oder Merkmale der Instanz für die Arbeitsvorrichtung ermöglichen, beispielsweise die Ermittlung besserer Greifkoordinaten für einen Arm eines Roboters.

Gemäß einer Ausführungsform umfasst das Verfahren weiterhin das Ermitteln von geometrischen Merkmalen, insbesondere von Position und/oder Ausdehnung und/oder Ausrichtung, der segmentierten Instanz, insbesondere wobei die ermittelten geometrischen Merkmale an eine Arbeitsvorrichtung übertragen werden. Bei der Arbeitsvorrichtung kann es sich beispielsweise um einen Roboter handeln, an den Greifkoordinaten zum Greifen der Instanz übermittelt werden, beispielsweise beim Bin Picking oder im Rahmen einer Palettierung oder einer Bestückung oder Entladung eines Förderbands.

Die Aufgabe wird weiterhin in einem zweiten Aspekt der Erfindung durch eine Vorrichtung gemäß dem Anspruch 11 gelöst, und insbesondere dadurch, dass die Vorrichtung eine Kameravorrichtung und eine Kontroll- und Steuereinheit aufweist, wobei die Kameravorrichtung dazu ausgebildet ist, ein Bild der Arbeitsumgebung aufzunehmen und an die Kontroll- und Steuereinheit zu übertragen, wobei die Kontroll- und Steuereinheit dazu ausgebildet ist, eine vorgegebene oder vorgebbare Ausgangsregion innerhalb der Instanz in dem Bild der Arbeitsumgebung, insbesondere automatisch, zu detektieren und dadurch eine Instanz für das Segmentieren der Instanz auszuwählen, und wobei die Kontroll- und Steuereinheit dazu ausgebildet ist, die Instanz in dem Bild mittels einer Segmentierung zu erkennen, wobei die Instanz ausgehend von der detektierten und innerhalb der Instanz angeordneten Ausgangsregion segmentiert wird, insbesondere wobei das Segmentieren der Instanz in dem Bild vollständig automatisch und interaktionsfrei erfolgt.

Die erfindungsgemäße Vorrichtung und ihre Ausführungsformen sind dazu ausgebildet, das erfindungsgemäße Verfahren oder eines seiner Ausführungsformen auszuführen. Die Ausführungen zu dem Verfahren und seinen Ausführungsformen gelten entsprechend.

Demgemäß ist die Kontroll- und Steuereinheit der Vorrichtung dazu ausgebildet, eine Ausgangsregion einer beliebigen Instanz in dem Bild zu detektieren und auf diese für eine nachfolgende Segmentierung auszuwählen. Die Kontroll- und Steuereinheit ist weiterhin dazu ausgebildet, nach erfolgter Auswahl die Instanz in dem Bild ausgehend von der detektierten Ausgangsregion zu segmentieren. Die Vorrichtung ermöglicht somit ein einfaches, schnelles, effizientes und kostengünstiges Erkennen einer Instanz eines Objektes während eines Arbeitsablaufs in einer Arbeitsumgebung.

Gemäß einer Ausführungsform ist die Kontroll- und Steuereinheit weiterhin dazu ausgebildet, geometrische Merkmale der segmentierten Instanz, insbesondere von Position und/oder Ausdehnung und/oder Ausrichtung zu ermitteln, insbesondere wobei die geometrischen Merkmale an eine Arbeitsvorrichtung übertragen werden. Bei der Arbeitsvorrichtung kann es sich beispielsweise um einen Roboter handeln, an den Greifkoordinaten zum Greifen der Instanz übermittelt werden, beispielsweise beim Bin Picking oder im Rahmen einer Palettierung oder einer Bestückung oder Entladung eines Förderbands.

Die Aufgabe wird darüber hinaus in einem dritten Aspekt der Erfindung durch ein System zum Steuern eines Arbeitsablaufs in einer Arbeitsumgebung gelöst, umfassend eine Vorrichtung nach Anspruch 11 oder 12, eine Arbeitsvorrichtung, insbesondere Roboter, welche dazu ausgebildet ist, Schritte des Arbeitsablaufs durchzuführen und eine Steuervorrichtung, die dazu ausgebildet ist, basierend auf von der Vorrichtung übertragenen geometrischen Merkmalen Steuerparameter für die Arbeitsvorrichtung zu berechnen und an die Arbeitsvorrichtung zu übermitteln. Die Steuervorrichtung kann ein integraler Bestandteil der Vorrichtung sein oder separat von der Vorrichtung angeordnet sein. Die Steuerparameter können beispielsweise Koordinaten wie optimale Greifkoordinaten zum Greifen der Instanz durch einen Roboterarm umfassen.

Gemäß einer Ausführungsform ist die Steuervorrichtung dazu ausgebildet, die Steuerparameter aus von der Vorrichtung übertragenen geometrischen Parametern mittels eines Neuronalen Netzes zu berechnen. Dies ermöglicht eine schnelle und präzise Berechnung der Steuerparameter aus den geometrischen Merkmalen der Instanz, was den Arbeitsablauf beschleunigt und dessen Qualität verbessert.

Die Erfindung wird nachfolgend lediglich beispielhaft anhand der Figuren erläutert.
Fig. 1 zeigt eine Ausführungsform des erfindungsgemäßen Systems in einer schematischen Darstellung in einer Seitenansicht,
Fig. 2 zeigt einen Ausschnitt der Arbeitsumgebung der Fig. 1 in einer Obersicht.

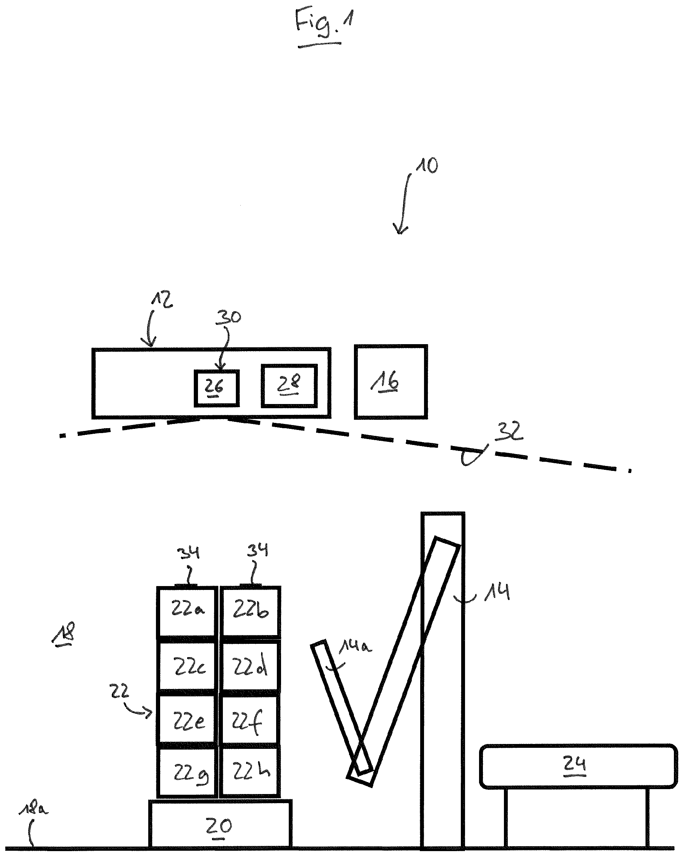

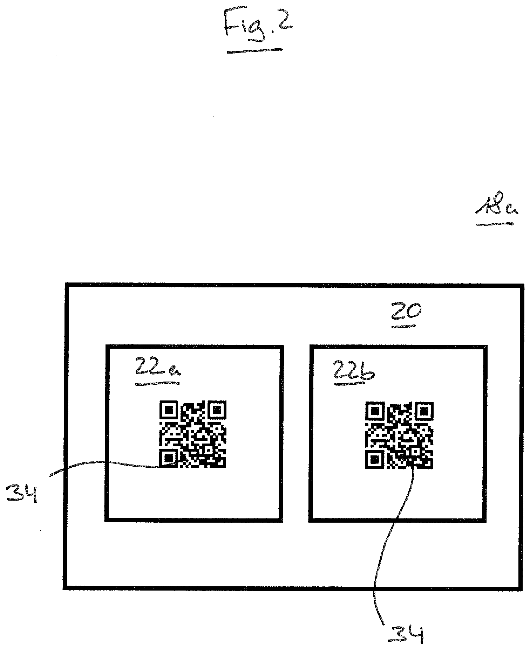

Fig. 1 und 2 zeigen eine Ausführungsform eines erfindungsgemäßen Systems 10 in schematischen Darstellungen. Das System 10 umfasst eine Vorrichtung 12 zum Erkennen einer Instanz eines Objektes, eine Arbeitsvorrichtung 14, hier schematisch als Roboter dargestellt, und eine Steuervorrichtung 16. Das System 10 befindet sich in einer Halle 18, welche eine Arbeitsumgebung bildet. Auf dem Boden 18a der Halle 18 befindet sich eine mit Warenpaketen 22 beladene Palette 20, welche entladen werden soll. Hierzu werden die übereinander gestapelten Instanzen 22a bis 22h der Warenpakete 22 nacheinander von einem Arm 14a des Roboters 14 von der Palette 20 gehoben und auf einem Förderband 24 positioniert.

Die Vorrichtung 12 umfasst eine Kameravorrichtung 26 und eine Kontroll- und Steuereinheit 28. Die Kameravorrichtung 26 ist über der Palette 20 angeordnet und beinhaltet einen Bildsensor 30, in welchem eine Vielzahl von Bildelementen angeordnet ist und welcher dazu ausgebildet ist, ein zweidimensionales Abbild der Arbeitsumgebung 18 zu erzeugen. Bei dem Bildsensor 30 kann es sich beispielsweise um eine 2D RGB-Kamera handeln. Die Kameravorrichtung 26 ist dazu ausgebildet, mittels des Bildsensors 30 eine kontinuierliche Abfolge von Bilddaten eines Bereichs 32 der Arbeitsumgebung 18 aufzunehmen.

Wie in der Fig.2 gezeigten Obersicht der mit Warenpaketen 22 beladenen Palette 20 ersichtlich, ist auf der der Kameravorrichtung 26 zugewandten Oberseite der Warenpakete 22 jeweils ein QR-Code 34 angebracht. Der QR-Code 34 kann für die einzelnen Instanzen 22a bis 22h der Warenpakete 22 identisch sein oder auch individuell ausgebildet sein und sich von Instanz zu Instanz unterscheiden.

Die Kontroll- und Steuereinheit 28 ist dazu ausgebildet, in einem von der Kameravorrichtung 26 übertragenen Bild der Arbeitsumgebung 18 eine beliebige Instanz der Warenpakete 22, beispielsweise die Instanz 22b, auszuwählen, indem sie den innerhalb der Fläche der Instanz 22b liegenden QR-Code 34 als Ausgangsregion für eine Segmentierung detektiert. Die Kontroll- und Steuereinheit 28 ist weiterhin dazu ausgebildet, nach einer erfolgten Auswahl die Instanz 22c in dem Bild ausgehend von der detektierten Ausgangsregion 34 zu segmentieren und geometrische Merkmale wie Position und/oder Ausdehnung und/oder Ausrichtung der segmentierten Instanz 22c zu ermitteln.

Die Steuervorrichtung 16 ist dazu ausgebildet, basierend auf von der Vorrichtung 12 übertragenen geometrischen Merkmalen der Instanz 22c Steuerparameter für die Arbeitsvorrichtung 14 zu berechnen und an die Arbeitsvorrichtung 14 zu übermitteln.

Eine Ausführungsform des Verfahrens zum Erkennen zumindest einer Instanz eines Objektes während eines Arbeitsablaufs in einer Arbeitsumgebung wird anhand des Systems 10 der Fig. 1 und 2 erläutert.

Der Arbeitsablauf umfasst die Entnahme einzelner Instanzen 22a bis 22h von Warenpaketen 22 von einer Palette 20 und das Positionieren der entnommenen Instanzen auf einem Förderband 24. Zu dem in der Fig. 1 gezeigten frühen ersten Zeitpunkt des Arbeitsablaufs befinden sich noch viele Instanzen 22a bis 22h von Warenpaketen 22 auf der Palette 20. Während des Entladens der Palette 20 wird die Arbeitsumgebung 18 und insbesondere die mit Warenpaketen 22 beladene Palette 20 von der Kameravorrichtung 12 überwacht. Hierbei wird eine Abfolge von Bilddaten eines Bereichs 32 der Arbeitsumgebung 18 erzeugt. Diese Bilddaten stellen jeweils ein aktuelles Bild der Arbeitsumgebung 18 dar.

Zu Beginn des Entladens der Palette 20 wird ein aktuelles Bild der Arbeitsumgebung 18 an die Kontroll- und Steuereinheit 28 übertragen, welche das Bild analysiert und in dem Bild nach, jeweils durch einen QR-Code 34 gebildete, Ausgangsregionen 34 sucht. In dem vorliegenden Beispiel wird die Kontroll- und Steuereinheit 28 feststellen, dass zwei mögliche Ausgangsregionen auf den Instanzen 22a und 22b in dem Bild erkannt wurden. Die Kontroll- und Steuereinheit 28 wählt nun einen der beiden detektierten QR-Codes als Ausgangregion 34 für eine nachfolgende Segmentierung, wodurch jene Instanz, beispielsweise die Instanz 22b, für den nachfolgenden Segmentierungsvorgang ausgewählt wurde. Die Ausgangsregion 34 bildet somit eine automatisch gesetzten Positivpunkt oder positive Markierung für die Instanz 22b, welche nun aktuell ausgewählt ist und nachfolgend segmentiert wird. Gleichzeitig bildet die Ausgangsregion 34 für den aktuellen Segmentierungsvorgang einen Negativpunkt oder negative Markierung für die zweite möglichen Instanz 22a im Bild, wodurch diese von dem aktuellen Segmentierungsvorgang ausgeschlossen ist.

Nachdem die Instanz 22b ausgewählt wurde, wird die Instanz 22b in dem Bild der Arbeitsumgebung 18 ausgehend von dem detektierten QR-Code 34 durch die Kontroll- und Steuereinheit 28 segmentiert und dadurch erkannt. Nach Beendigung des Segmentierungsvorgangs ermittelt die Kontroll- und Steuereinheit 28 geometrische Merkmale wie Position und/oder Ausdehnung und/oder Ausrichtung der segmentierten Instanz 22b und überträgt diese Information an die Steuervorrichtung 16. Basierend auf den von der Kontroll- und Steuereinheit 28 übertragenen geometrischen Merkmalen berechnet die Steuervorrichtung16 Steuerparameter und übermittelt diese an den Roboter 14. Die Steuerparameter können beispielsweise optimale Greifkoordinaten zum Greifen der Instanz 22b auf der Palette 20 umfassen. Zur Ermittlung der Steuerparameter kann die Steuervorrichtung 16 über ein Neuronales Netz verfügen, welches Aufgaben wie die Bestimmung dreidimensionaler Koordinaten übernimmt. Die berechneten Steuerparameter können kabelgebunden oder drahtlos an den Host des Roboters 14 übertragen werden

Nachdem die Instanz 22b von der Palette 20 entnommen und auf das Förderband 24 gehoben wurde, kann das Verfahren wiederholt werden, bis die Palette 20 komplett entladen wurde. Hierbei kann das Erkennen der Instanz 22a auf demselben Bild erfolgen, auf dem bereits die Instanz 22b erkannt wurde. Alternativ kann das Erkennen der Instanz 22a auf einem aktuellen Bild erfolgen, das nach dem Bild aufgenommen wurde, auf dem die Instanz 22b erkannt wurde. Insbesondere für das Erkennen weiterer Instanzen 22c bis 22f ist das Übertragen eines weiteren aktuellen Bildes an die Kontroll- und Steuereinheit 28 zur Detektion der dort angebrachten QR-Codes zwingend erforderlich.

Das Verfahren ermöglicht ein schnelles, effizientes und kostengünstiges Erkennen von Instanzen eines Objektes während eines Arbeitsvorgangs. Die Segmentierung der Instanz kann insbesondere vollständig automatisiert werden und erfordert somit keine Interaktion durch eine Person mit Fachwissen. So ist es ist beispielsweise nicht mehr erforderlich, manuell, beispielsweise durch ein Anklicken der entsprechenden Position, Positivpunkte als Vorabinformation in das Bild der Instanz zu setzen, um die Instanz für die Segmentierung auszuwählen. Das Verfahren eignet sich somit auch für automatisierte Instanz-Segmentierungsaufgaben von unbekannten Objekten.

### Bezugszeichen

10 System
12 Vorrichtung zum Erkennen einer Instanz eines Objektes
14 Roboter
14a Roboterarm
16 Steuervorrichtung
18 Arbeitsumgebung/Halle
18a Boden der Halle
20 Palette
22 Warenpaket
22a bis 22h Instanzen der Warenpakete
24 Förderband
26 Kameravorrichtung
28 Kontroll- und Steuereinheit
30 Bildsensor
32 Bereich der Arbeitsumgebung
34 Ausgangsregion/QR-Code

## Patentansprüche

1. Verfahren zum Erkennen zumindest einer Instanz (22a bis 22h) eines Objektes (22) während eines Arbeitsablaufs in einer Arbeitsumgebung (18), mit den Schritten
- Aufnehmen eines Bildes der Arbeitsumgebung (18) durch einer Kameravorrichtung (26),
- Übertragen des Bildes an eine Kontroll- und Steuereinheit (28),
- Detektieren einer vorgegebenen oder vorgebbaren Ausgangsregion (34) für das Segmentieren der Instanz (22a bis 22h) in dem Bild, wodurch die Instanz (22a bis 22h) durch die Kontroll- und Steuereinheit (28) für das Segmentieren ausgewählt wird,
- Segmentieren der Instanz (22a bis 22h) in dem Bild ausgehend von der detektierten und innerhalb der Instanz (22a bis 22h) angeordneten Ausgangsregion (34) durch die Kontroll- und Steuereinheit (28) und Erkennen der segmentierten Instanz (22a bis 22h).

2. Verfahren nach Anspruch 1, wobei das Detektieren der Ausgangsregion (34) in dem Bild der Arbeitsumgebung (18) durch die Kontroll- und Steuereinheit (28) automatisch erfolgt.

3. Verfahren nach Anspruch 1 oder 2, wobei das Segmentieren der Instanz (22a bis 22h) in dem Bild vollständig automatisch und interaktionsfrei erfolgt.

4. Verfahren nach einem der vorhergehenden Ansprüche, wobei die Ausgangsregion (34) in dem Bild der Arbeitsumgebung (18) eine Fläche umfasst, die kleiner ist als die Fläche der Instanz (22a bis 22h) in dem Bild der Arbeitsumgebung (18), insbesondere wobei die Fläche der Ausgangsregion (18) kleiner ist als 80%, bevorzugt kleiner ist als 60% der Fläche der Instanz (22a bis 22h).

5. Verfahren nach einem der vorhergehenden Ansprüche, wobei sich die Ausgangsregion (34) und die Instanz in dem Bild der Arbeitsumgebung (18) in der Form und/oder der Helligkeitsverteilung und/oder dem Histogramm der Helligkeitswerte und/oder dem kumulierten Histogramm der Helligkeitswerte unterscheiden.

6. Verfahren nach einem der vorhergehenden Ansprüche, wobei die Ausgangsregion (34) eine kodierte Markierung, insbesondere ein Barcode oder ein QR-Code ist.

7. Verfahren nach einem der vorhergehenden Ansprüche, wobei die Kontroll- und Steuereinheit (28) ein Neuronales Netzwerk umfasst, wobei das Neuronale Netzwerk eine insbesondere textbasierte und/oder audiobasierte, Objektbeschreibung der Ausgangsregion (34) empfängt, die Objektbeschreibung in eine bildliche Darstellung decodiert und überträgt, und die Ausgangsregion (34) für das Segmentieren der Instanz auf Basis der in eine bildliche Darstellung übertragenen Objektbeschreibung in dem Bild der Arbeitsumgebung (18) detektiert.

8. Verfahren nach einem der vorhergehenden Ansprüche, wobei eine vorgegebene Ausrichtung und/oder eine vorgegebene Position der detektierten Ausgangsregion (34) an der Instanz (22a bis 22h) als zusätzliche Information für das Segmentieren der Instanz verwendet wird.

9. Verfahren nach einem der vorhergehenden Ansprüche, wobei es sich bei dem Bild um ein zweidimensionales oder ein dreidimensionales Abbild der Arbeitsumgebung (18) handelt.

10. Verfahren nach einem der vorhergehenden Ansprüche, weiterhin umfassend das Ermitteln von geometrischen Merkmalen, insbesondere von Position und/oder Ausdehnung und/oder Ausrichtung, der segmentierten Instanz (22a bis 22h), insbesondere wobei die ermittelten geometrischen Merkmale an eine Arbeitsvorrichtung (14) übertragen werden.

11. Vorrichtung (12) zum Erkennen zumindest einer Instanz (22a bis 22h) eines Objektes während eines Arbeitsablaufs in einer Arbeitsumgebung (18), wobei die Vorrichtung (12) eine Kameravorrichtung (26) und eine Kontroll- und Steuereinheit (28) aufweist,
wobei die Kameravorrichtung (26) dazu ausgebildet ist, ein Bild der Arbeitsumgebung (18) aufzunehmen und an die Kontroll- und Steuereinheit (28) zu übertragen,
wobei die Kontroll- und Steuereinheit (28) dazu ausgebildet ist, eine vorgegebene oder vorgebbare Ausgangsregion (34) in dem Bild der Arbeitsumgebung (18), insbesondere automatisch, zu detektieren und dadurch eine Instanz (22a bis 22h) für das Segmentieren der Instanz (22a bis 22h) auszuwählen, und
wobei die Kontroll- und Steuereinheit (28) dazu ausgebildet ist, die Instanz (22a bis 22h) in dem Bild mittels einer Segmentierung zu erkennen, wobei die Instanz (22a bis 22h) ausgehend von der detektierten und innerhalb der Instanz angeordneten Ausgangsregion (34) segmentiert wird, insbesondere wobei das Segmentieren der Instanz (22a bis 22h) in dem Bild vollständig automatisch und interaktionsfrei erfolgt.

12. Vorrichtung (12) nach Anspruch 11, wobei die Kontroll- und Steuereinheit (28) weiterhin dazu ausgebildet ist, geometrische Merkmale der segmentierten Instanz (22a bis 22h), insbesondere von Position und/oder Ausdehnung und/oder Ausrichtung zu ermitteln, insbesondere wobei die geometrischen Merkmale an eine Arbeitsvorrichtung (14) übertragen werden.

13. System (10) zum Steuern eines Arbeitsablaufs in einer Arbeitsumgebung (28), umfassend eine Vorrichtung (12) nach Anspruch 11 oder 12, eine Arbeitsvorrichtung (14), insbesondere Roboter, welche dazu ausgebildet ist, Schritte des Arbeitsablaufs durchzuführen und eine Steuervorrichtung (16), die dazu ausgebildet ist, basierend auf von der Vorrichtung (12) übertragenen geometrischen Merkmalen einer Instanz (22a bis 22h) Steuerparameter für die Arbeitsvorrichtung (14) zu berechnen und an die Arbeitsvorrichtung (14) zu übermitteln.

14. System nach Anspruch 13, wobei die Steuervorrichtung (16) dazu ausgebildet ist, die Steuerparameter aus von der Vorrichtung (12) übertragenen geometrischen Merkmalen mittels eines Neuronalen Netzes zu berechnen.
